# FASCICULE DE BREVET EUROPEEN

(11) **EP 0 457 997 B1**
(45) Date de publication et mention de la délivrance du brevet: **09.08.1995**
(21) Numéro de dépôt: 90470028.3
(22) Date de dépôt: 21.05.1990
(51) Int. Cl.: A61C 17/02

(54) **Seringue dentaire avec canule de protection jetable**
Zahnärztliche Spritze mit Einweg-Mundstück
Dental syringe with disposable mouthpiece

(43) Date de publication de la demande: 27.11.1991
(73) Titulaire: Heuillon, Annette, F-55000 Bar le Duc (FR)
(72) Inventeur: Heuillon, Annette, F-55000 Bar le Duc (FR)
(74) Mandataire: Martin, Jean-Paul

(56) Documents cités:
- DE-A- 3 708 736
- US-A- 2 711 586
- US-A- 4 108 178

## Description

La présente invention a pour objet une seringue dentaire pour la projection d'air et/ou d'eau en chirurgie dentaire, du type comportant un tube amovible, pourvu à son extrémité proximale d'un moyen de liaison au corps de seringue, et à son extrémité distale d'un nez conique mâle, une canule jetable conique femelle pouvant venir coiffer ce nez conique mâle, un canal longitudinal d'amenée d'eau étant formé dans le tube et dans le nez.

On comprendra dans ce qui suit que l'on appelle "seringue" un appareil utilisé par les dentistes pour pulvériser à haute pression un fluide tel que eau et/ou air sur une zone dentaire traitée.

Des dispositifs de ce type sont en eux-mêmes connus (US-A-4907968).

Dans ces dispositifs, il s'agit en fait de disposer de simples protections temporaires sur le nez d'une seringue dentaire. Ce résultat est imparfait et l'enlèvement de la gaine protectrice est relativement laborieux. Par ailleurs, la pluralité de nez de seringue existants impose de prévoir une multitude de protections possibles, ce qui rend cette proposition industriellement peu intéressante.

Par ailleurs, le GB-A 2213732 décrit une seringue dentaire conforme au préambule de la revendication 1, dans laquelle l'air et l'eau sortent simultanément dans le même plan transversal de l'embout. Il en résulte que leur mélange n'est pas effectué de manière intime, ce qui affecte la qualité du traitement dentaire et limite l'efficacité du jet de mélange.

L'invention a pour objet de remédier à ces inconvénients.

Conformément à l'invention, la seringue comporte les caractéristiques mentionnées à la partie caractérisante de la revendication 1.

Grâce à cette structure, on peut utiliser des canules jetables utilisables sur toute seringue.

Il suffit de prévoir quelques adaptateurs standards en leur jonction proximale pour équiper la plupart des seringues actuellement sur le marché.

Avantageusement, l'adaptateur comportera les différents canaux d'amenée et de distribution des fluides vers l'extrémité du nez de la seringue.

De manière préférentielle, l'adaptateur sera fileté de manière à ce que la canule soit montée sur celui-ci par autotaraudage.

On comprendra mieux l'invention à l'aide de la description faite ci-après d'un mode non limitatif de mise en oeuvre en référence aux dessins annexés dans lesquels :
- la figure 1 est une vue en coupe longitudinale de l'extrémité d'une seringue conforme à l'invention ;
- la figure 2 est une vue en coupe longitudinale partielle d'un organe de liaison entre l'extrémité de la seringue et le corps de la seringue, non représenté.

On a représenté sur le schéma un tube (1) qui, par un moyen de liaison (2), vient s'emboîter sur une seringue dentaire non représentée, l'ensemble (1, 2) constituant un adaptateur à un corps de seringue non représenté.

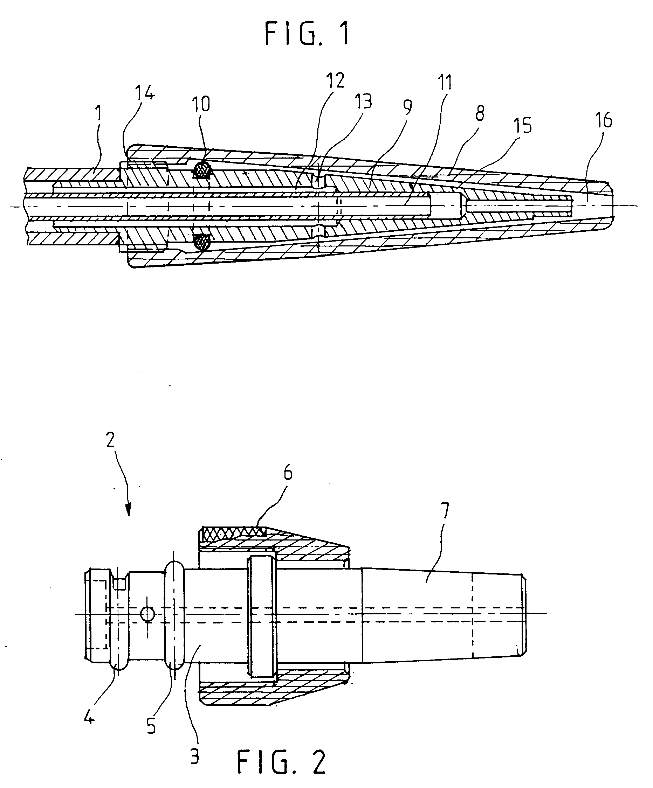

Le dispositif représenté figure 2 montre le moyen de liaison (2) traversé de part en part longitudinalement par deux alésages permettant d'une part le passage d'eau pour le rinçage et d'autre part le passage d'air pour le séchage. Sur l'extrémité gauche par rapport à la figure du corps (3), deux gorges reçoivent des joints toriques (4, 5) permettant d'obtenir l'étanchéité lors de l'assemblage en bout du corps de seringue. Une bague d'accouplement (6) vient bloquer l'ensemble par vissage ou encliquetage.

Sur l'extrémité droite du corps, un cône mâle (7) d'une pente d'environ 8% reçoit l'extrémité du tube 1.

La canule (8) en matériau synthétique, par exemple en PVC ou polyéthylène, s'emboîte à force ou par vissage autotaraudant sur l'extrémité du nez (9) conique mâle de la seringue, muni à cette fin d'un filetage (14) disposé en amont ou en aval d'un joint torique (10) d'étanchéité. L'eau arrive par un canal longitudinal (11) débouchant à l'extrémité du nez et l'air par un canal longitudinal (12) réalisé concentriquement au canal (11) d'amenée d'eau, débouchant entre la face externe du nez (9) et la face interne de la canule (8) par des alésages transversaux (13). Au-delà de ces derniers, le canal (12) débouche dans un espace défini entre la face externe du nez (9) et la face interne de la canule.

Le canal (11) est réalisé par exemple en un matériau synthétique souple, disposé à l'intérieur du canal (12). Il est fixé par collage à l'extrémité (15) de la partie tronconique.

Le mélange éventuel air/eau se fait donc en aval par rapport au joint (10) et interdit l'utilisation de la seringue sans canule.

Il est clair que l'extrémité du nez de la seringue peut être droite ou coudée. De même, la canule peut être munie d'un filetage intérieur ou d'ergots pour le vissage autotaraudant.

Dans une variante simplifiée de mise en oeuvre, l'eau et l'air peuvent déboucher directement en bout du nez de la seringue, de manière conventionnelle.

La canule est légèrement plus longue que le cône en son extrémité (16), pour éviter la formation d'une goutte qui pourrait subsister sur celui-ci et donc infecter la seringue.

Avantageusement, les alésages transversaux (13) peuvent être prolongés chacun sur la face externe du cône par une rainure longitudinale ménagée dans ledit cône et débouchant à l'extrémité du nez de la seringue.

## Revendications

1. Seringue dentaire pour la projection d'air et/ou d'eau en chirurgie dentaire, comportant un tube amovible (1), pourvu à son extrémité proximale d'un moyen de liaison (2) au corps de seringue, et à son extrémité distale d'un nez conique mâle (9), une canule jetable conique femelle (8) pouvant venir coiffer ce nez conique mâle, un canal longitudinal (11) d'amenée d'eau étant formé dans le tube et dans le nez (9) caractérisé en ce que, ledit canal débouchant à l'extrémité du nez, un canal longitudinal (12) d'amenée d'air est réalisé concentriquement au canal d'amenée d'eau, dans le tube et dans le nez conique et débouche à son extrémité par des alésages transversaux (13) agencés dans le nez (9) puis dans un espace défini entre la face externe du nez (9) et la face interne de la canule (8) ou dans des rainures réalisées dans le nez (9), et la canule s'étend légèrement au-delà de l'extrémité du nez conique (9).

2. Seringue selon la revendication 1, caractérisée en ce que le moyen de liaison (2) présente à son extrémité proximale deux gorges recevant des joints toriques (4,5) assurant l'étanchéité entre l'eau et l'air lors de l'assemblage de l'adaptateur avec le corps de seringue, ainsi qu'une bague (6) d'accouplement venant bloquer l'ensemble par vissage ou encliquetage.

3. Seringue selon l'une des revendications 1 et 2, caractérisée en ce que la canule (8) s'emboîte à force ou par vissage autotaraudant sur le nez (9), lequel peut être à cet effet pourvu d'un filetage (14), et cette canule est pourvue d'un filetage interne ou d'ergots internes pour le vissage autotaraudant.

4. Seringue selon la revendication 3, caractérisée en ce qu'un joint torique (10) d'étanchéité est interposé entre le tube (1) et la canule (8), en amont ou en aval du filetage (14).

5. Seringue selon l'une des revendications 1 à 4, caractérisée en ce que le canal (11) d'amenée d'eau est un tube souple disposé à l'intérieur du canal (12) d'amenée d'air et fixé à l'extrémité du nez conique (9).

## Claims

1. Dental syringe for projecting air and/or water in dental surgery, comprising a removable tube (1), provided at its proximal end with means (2) for connection to the body of the syringe, and at its distal end with a male conical nose (9), a disposable female conical cannula (8) being adapted to fit over this male conical nose, a longitudinal water intake channel (11) being formed in the tube and in the nose (9),
characterised in that, with said channel opening out at the end of the nose, a longitudinal air intake channel (12) is provided concentrically with the water intake channel, in the tube and in the conical nose, and opens out at its end through transverse bores (13) formed in the nose (9), then in a space defined between the outer surface of the nose (9) and inner surface of the cannula (8) or in grooves provided in the nose (9), and the cannula extends slightly beyond the end of the conical nose (9).

2. Syringe according to claim 1, characterised in that the connecting means (2) comprise, at their proximal end, two grooves receiving toric joints (4, 5) which provide a leaktight seal between the water and air during assembly of the adaptor with the syringe body, as well as a coupling ring (6) which locks the assembly in place by screwing or latching.

3. Syringe according to one of claims 1 and 2, characterised in that the cannula (8) is force-fitted or fitted by self-tapping screwing onto the nose (9), which may be provided for this purpose with a screw thread (14), and this cannula is provided with an internal thread or internal tugs for self-tapping screwing.

4. Syringe according to claim 3, characterised in that a toric sealing joint (10) is interposed between the tube (1) and the cannula (8), upstream or downstream of the screw thread (14).

5. Syringe according to one of claims 1 to 4, characterised in that the water intake channel (11) is a flexible tube arranged inside the air intake channel (12) and fixed to the end of the conical nose (9).

## Patentansprüche

1. Zahnärztliche Spritze für die Abgabe von Luft und/oder Wasser in der Zahnchirurgie, mit einem beweglichen Rohr (1), das an seinem äußeren Ende mit einer Verbindungseinrichtung (2) zur Verbindung mit dem Spritzenkörper versehen ist und an seinem inneren Ende eine konische, vorspringende Nase (9) aufweist, wobei eine wegwerfbare, konische, hohle Kanüle (8) diese vorspringende, konische Nase überdecken kann, mit einem längsgerichteten Kanal (11) zur Zufuhr von Wasser, der in dem Rohr und der Nase (9) ausgebildet ist, dadurch **gekennzeichnet**, daß der Kanal am Ende der Nase mündet, daß ein Längskanal (12) zur Zufuhr von Luft konzentrisch zu dem Zufuhrkanal für Wasser in dem Rohr und der konischen Nase vorgesehen ist und an seinem Ende über Querbohrungen (13) in der Nase (9) und einen Zwischenraum zwischen der äußeren Fläche der Nase (9) und der inneren Fläche der Kanüle (8) und Nuten in der Nase (9) mündet, und daß die Kanüle sich leicht über das Ende der konischen Nase (9) hinaus erstreckt.

2. Spritze nach Anspruch 1, dadurch **gekennzeichnet**, daß die Verbindungseinrichtung (2) an ihrem äußeren Ende zwei Kehlen aufweist, die kreisringförmige Dichtungen (4,5) aufnehmen, die die Abdichtung zwischen dem Wasser und der Luft bei der Verbindung des Adapters mit dem Korpus der Spritze gewährleisten, sowie einen Verbindungsring (6), der die Anordnung durch Verschrauben oder Verrasten fest verbindet.

3. Spritze nach Anspruch 1 und 2, dadurch **gekennzeichnet**, daß die Kanüle (8) die Nase (9) kraftschlüssig oder mit selbsthemmender Verschraubung umfaßt, welche zu diesem Zweck mit einem Gewinde (14) versehen werden kann, und daß in diesem Falle die Kanüle mit einem Innengewinde oder inneren Ansätzen für die selbsthemmende Verschraubung versehen ist.

4. Spritze nach Anspruch 3, dadurch **gekennzeichnet**, daß die kreisringförmige Dichtung (10) zwischen dem Rohr (1) und der Kanüle (8) stromaufwärts oder stromabwärts des Gewindes (14) liegt.

5. Spritze nach einem der Ansprüche 1 bis 4, dadurch **gekennzeichnet**, daß der Kanal (11) für die Zufuhr von Wasser ein weicher Schlauch ist, der im Inneren des Kanals (12) für die Zufuhr von Luft angeordnet und am Ende der konischen Nase (9) befestigt ist.
